(19) **Europäisches Patentamt / European Patent Office / Office européen des brevets**

(11) **EP 1 959 700 A1**

(12) **EUROPEAN PATENT APPLICATION**
published in accordance with Art. 158(3) EPC

(43) Date of publication:
**20.08.2008 Bulletin 2008/34**

(51) Int Cl.:
*H04Q 7/36* (2006.01)  *H04B 7/26* (2006.01)
*H04J 11/00* (2006.01)  *H04J 15/00* (2006.01)

(21) Application number: **07706994.6**

(22) Date of filing: **18.01.2007**

(86) International application number:
**PCT/JP2007/050690**

(87) International publication number:
**WO 2007/083699 (26.07.2007 Gazette 2007/30)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.01.2006 JP 2006011556**

(71) Applicant: **MATSUSHITA ELECTRIC INDUSTRIAL CO., LTD.**
**Osaka 571-8501 (JP)**

(72) Inventors:
• **HOSHINO, Masayuki**
c/o Matsushita El.Ind.Co.Ltd
**2-1-61, Shiromi, Chuo-ku, Osaka 540-6207 (JP)**
• **MIYOSHI, Kenichi**
c/o Matsushita El.Ind.Co.Ltd.
**2-1-61, Shiromi, Chuo-ku, Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

(54) **RADIO TRANSMISSION DEVICE AND RADIO TRANSMISSION METHOD**

(57) Disclosed are a radio transmission device and a radio transmission method capable of reducing a reception error of a user at other cell and improving transmission efficiency at the other cell when frequency scheduling is combined with beam forming. In the device and the method, a beam allocation table storage unit (101) has a table in which resource blocks bm1, bm2, bm3, bm4 arranged in the ascending order of the frequency are repeatedly allocated by using four beams bm1 to bm4 for the number of resource blocks fn. According to beam information and SIR information fed back from a reception device (150), a resource control unit (102) references the beam allocation table storage unit (101), selects a combination of a beam direction and a resource block having the most preferable SIR, and allocates the combination for the user.

FIG.4

**Description**

Technical Field

The present invention relates to a radio transmitting apparatus and radio transmission method for performing frequency scheduling and beam forming.

Background Art

In multicarrier transmission systems, frequency scheduling is performed. Frequency scheduling is a technique of utilizing difference of frequency characteristics of propagation paths produced due to multipath transmission for changing on a per user basis and allocating frequencies of good characteristics to the respective users.

This frequency scheduling is realized by each user feeding back frequency characteristics of each propagation path and by a base station allocating a frequency to each user based on the feedback signal.

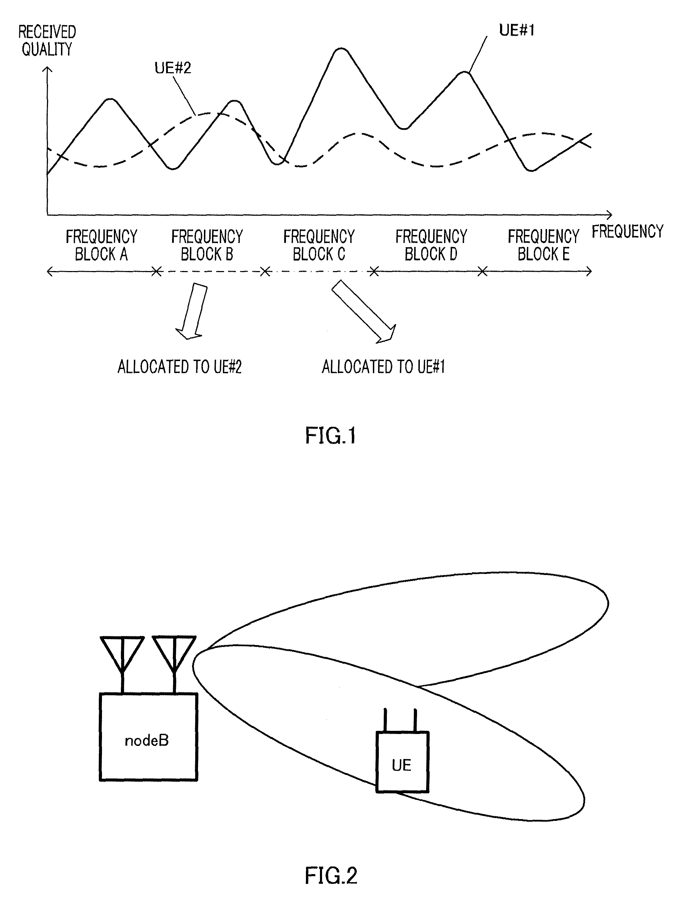

FIG. 1 shows an example of operations of frequency scheduling. FIG. 1 shows an example where two users UE#1 and UE#2 feed back received quality of their respective frequencies and a base station which has received the feedback allocates frequency blocks of good quality to the respective users. That is, the base station allocates frequency blocks A, C and D to UE#1 and frequency blocks B and E to UE#2. Here, when attention is focused on frequency block B, both UE#1 and UE#2 have good received quality, but UE#2 has better received quality than UE#1, and frequency block B is allocated to UE#2. Likewise, frequency block C is allocated to UE#1.

A method of applying beam forming to this frequency scheduling is possible. Beam forming is a method of securing signal intensity for a receiving apparatus by mainly controlling weights of a plurality of transmitting antennas and directing narrow beams (directivities) to the directions of desired waves. FIG.2 shows a specific example of operations of beam forming. In FIG. 2, assuming that a transmitting apparatus can transmit signals with two default directivities, a signal is transmitted using a beam directed to a receiving apparatus.

There is also a scheme called "preceding" that controls weights of a plurality of transmitting antennas. Precoding and the above-described beam forming are different in whether or not clear and narrow beams are formed, but are the same in that weights of a plurality of transmitting antennas are controlled to secure the intensity of signals to a receiving apparatus. Hereinafter, no distinction will be made between "precoding" and "beam forming," and "beam forming" will be described in a sense covering of precoding. Non-Patent Document 1: Qualcomm, "MIMO proposal for MIMO-WCDMA evaluation", R1-050912, 3GPP TSG-RAN WG 1 #42, London, United Kingdom, Aug. 29 - Sep. 2, 2005.

Disclosure of Invention

Problems to be Solved by the Invention

However, when the transmitting apparatus allocates random beams according to feedback of the users, beams transmitting signals are varied in time. For this reason, the magnitude of interference changes and SIR (Signal to Interference Ratio) differs between time t1 at which a user in a neighboring cell measures the SIR and time t2 at which the user receives an allocated packet. In this way, when the SIR at time t2 is worse than the SIR at time t1, a packet error occurs, and, on the contrary, when the SIR is better at time t2 than at time t1, transmission efficiency loss occurs.

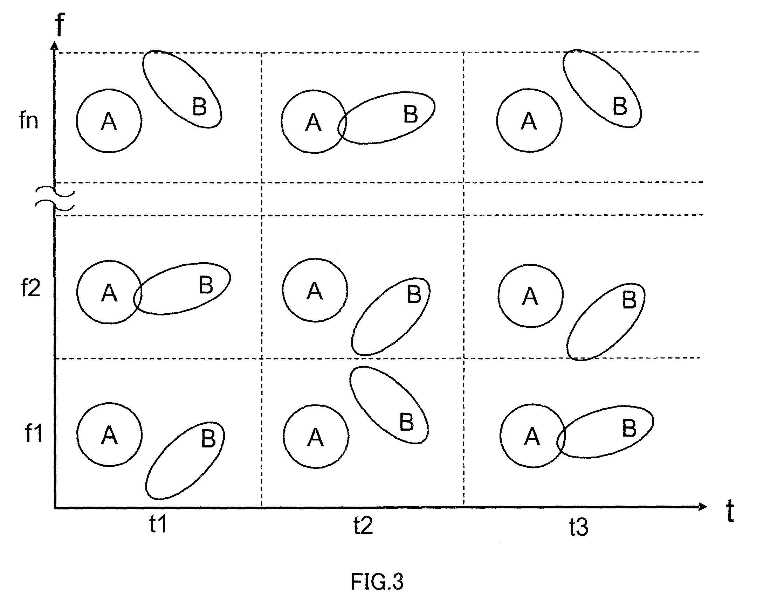

FIG.3 shows how random beams are allocated to users. In FIG. 3, the horizontal axis is time (t1 to t3) and the vertical axis is frequency (frequency blocks f1 to fn). Furthermore, suppose that there are two neighboring cells, cell A and cell B and beam forming is performed in cell B.

When attention is focused on frequency block f2, the beam is oriented toward cell A at time t1, whereas the beam is oriented toward a direction shifted from the direction of cell A at time t2. For this reason, in cell A, the SIR at time t2 is better than the SIR at time t1, and, in frequency block f2, a user of cell A who reports SIR at time t1 and attempts to receive a packet at time t2 uses a modulation scheme and coding rate of low transmission efficiency for the SIR at reception of the packet, and transmission efficiency loss occurs.

Likewise, when attention is focused on frequency block fn, the beam is oriented toward a direction shifted from the direction of cell A at time t1, whereas the beam is oriented toward cell A at time t2. For this reason, in cell A, the SIR at time t2 is poorer than the SIR at time t1 and, in frequency block fn, the user of cell A who reports the SIR at time t1 and attempts to receive a packet at time t2 uses a modulation scheme and coding rate of high transmission efficiency for the SIR at receiving the packet, and a packet error occurs.

It is an obj ect of the present invention to provide a radio transmitting apparatus and a radio transmission method that, when frequency scheduling and beam forming are combined, reduce reception errors by users in other cells and improve transmission efficiency in other cells.

Means for Solving the Problem

The radio transmitting apparatus according to the present invention adopts a configuration including: a storage section that associates a plurality of resource blocks to be allocated to users with a plurality of beams of different directions and stores the associated resource blocks and beams; a resource control section that allocates a resource block to a user of best received quality and allocates a beam associated with the resource block stored in the storage section; and a transmission section that transmits transmission data using the allocated resource block and beam.

The radio transmission method of the present invention includes a resource control step of adopting frequency scheduling and beam forming, whereby a plurality of beams of different directions associated with a plurality of resource blocks to be allocated to users are fixed in a time domain and switched in a frequency domain; and a transmission step of transmitting transmission data using the beams controlled in the resource control step.

Advantageous Effect of the Invention

According to the present invention, when frequency scheduling and beam forming are combined, it is possible to reduce reception errors by users in other cells and improve transmission efficiency in other cells.

Brief Description of Drawings

FIG.1 shows an example of operations of frequency scheduling;
FIG.2 shows a more specific example of operations of beam forming;
FIG.3 shows a situation in which random beams are allocated to users;
FIG.4 is a block diagram showing the configuration of the transmitting apparatus according to Embodiments 1 and 2 of the present invention;
FIG.5 shows an example of beam allocation table;
FIG.6 shows the beam and SIR information;
FIG.7 is a block diagram showing the internal configuration of the resource control section shown in FIG.4;
FIG.8 shows a situation in which the beams formed by the transmitting apparatus shown in FIG. 4 are switched;
FIG.9 is a block diagram showing the configuration of the receiving apparatus according to Embodiment 1 of the present invention;
FIG.10 shows a beam allocation table according to Embodiment 2 of the present invention;
FIG.11 shows a beam allocation table according to Embodiment 2 of the present invention;
FIG. 12 is a block diagram showing the configuration of the transmitting apparatus according to Embodiment 3 of the present invention;
FIG.13 is a block diagram showing the configuration of the transmitting apparatus according to Embodiment 4 of the present invention;
FIG.14 is a block diagram showing the configuration of the transmitting apparatus according to Embodiment 5 of the present invention; and
FIG. 15 shows the beam width is controlled gradually.

Best Mode for Carrying Out the Invention

Embodiments of the present invention will be described below in detail with reference to the accompanying drawings. However, in embodiments, the components having the same functions will be assigned the same reference numerals and overlapping descriptions will be omitted.

(Embodiment 1)

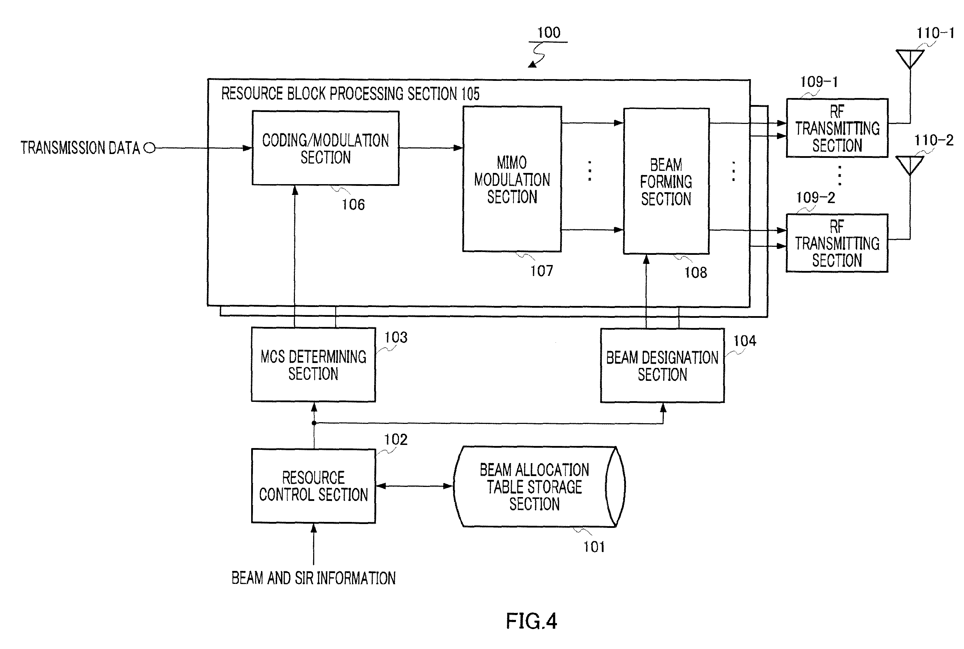

FIG.4 is a block diagram showing the configuration of transmitting apparatus 100 according to Embodiment 1 of the present invention. In this figure, beam allocation table storage section 101 stores a table in which beam information indicating a plurality of beam directions formed by transmitting apparatus 100 is associated with resource blocks (frequency blocks). The beam allocation table will be described later in detail.

Resource control section 102 acquires beam information and SIR information transmitted from receiving apparatus 150 (described later), refers to beam allocation table storage section 101 based on the acquired beam information and SIR information and selects a combination of the beam direction and the resource block where the SIR is optimum. SIR information of the selected resource block and the selected resource block are reported to MCS determining section 103 and the beam direction is reported to beam designation section 104. Resource control section 102 will be described later in detail.

MCS determining section 103 determines MCS (Modulation and Coding Scheme) information such as the coding rates and modulation schemes used for coding and modulation of transmission data of the corresponding users based on the resource block and SIR information reported from resource control section 102 and outputs the determined MCS information to coding/modulation section 106 of each resource block processing section 105.

Beam designation section 104 calculates weighting coefficients based on the beam information reported from resource control section 102 and outputs the calculated weighting coefficients to beam forming section 108 of each resource block processing section 105.

Resource block processing section 105 is provided with coding/modulation section 106, MIMO modulation section 107 and beam forming section 108. Coding/modulation section 106 applies coding processing and modulation processing to transmission data using the MCS information outputted from MCS determining section 103, generates a transmission symbol sequence and outputs the transmission symbol sequence generated to MIMO modulation section 107.

MIMO modulation section 107 applies MIMO modulation processing to the transmission symbol sequence outputted from coding/modulation section 106 and outputs the signal subjected to the MIMO modulation processing to beam forming section 108.

Beam forming section 108 forms a beam by assigning a weight to the signal outputted from MIMO modulation section 107 using the weighting coefficient outputted frombeam designation section 104 and outputs the weighted signal to RF transmitting sections 109-1 and 109-2.

RF transmitting sections 109-1 and 109-2 multiplex the signals outputted from beam forming sections 108 of each resource block processing section 105, apply predetermined radio transmission processing including D/A conversion and up-conversion to the multiplexed signal and transmits the signal subjected to the radio transmission processing from transmitting antennas 110-1 and 110-2.

Here, the beam allocation table will be explained. First, a large number such as several tens to several hundreds is generally set as the number of resource blocks upon using frequency scheduling. On the other hand, the number of beams in beam forming is several beams mainly due to limitation of the number of antennas that can be installed. For this reason, it is possible to efficiently use resources if beams arranged uniformly in space are repeatedly used for all resource blocks.

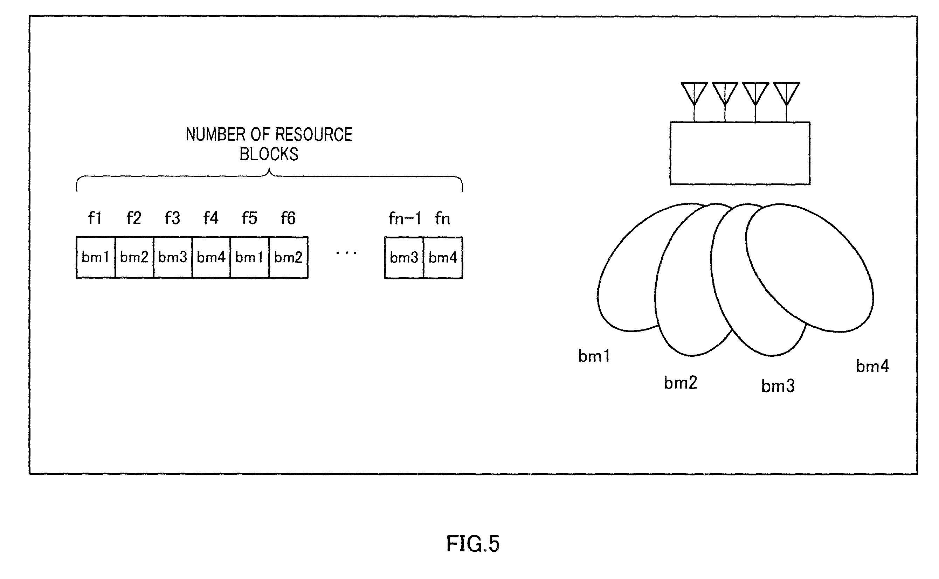

FIG.5 shows an example of the beam allocation table. In Fig. 5, four beams of bm1 to bm4 are used for fnresourceblocks, and bm1, bm2, bm3 andbm4 are repeatedly allocated to in order from the resource block of the lowest frequency. In this way, different beams are allocated to combinations of neighboring resource blocks such as frequencies f1 and f2, and fn-1 and fn of similar characteristics, so that it is possible to practically select beams in such combinations. Furthermore, as a beam oriented toward a certain direction, for example, focusing upon bm2, the beam is allocated to different frequency characteristics f2, f6, and ..., so that it is possible to select resource blocks with respect to the same beam gain.

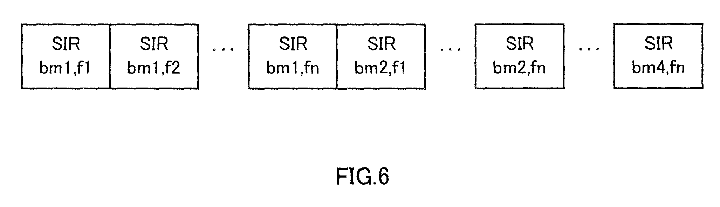

Furthermore, the beam and SIR information transmitted from receiving apparatus 150 will be explained here. As shown in FIG.6, with respect to the beam and SIR information, each of beams bm1 to bm4 are reported the SIR in order of resource blocks f1 to fn. That is, the SIR of resource blocks f1 to fn are reported for beam bm1, and the SIR of resource blocks f1 to fn are reported for beam bm2 as well. The same applies to beams bm3 and bm4.

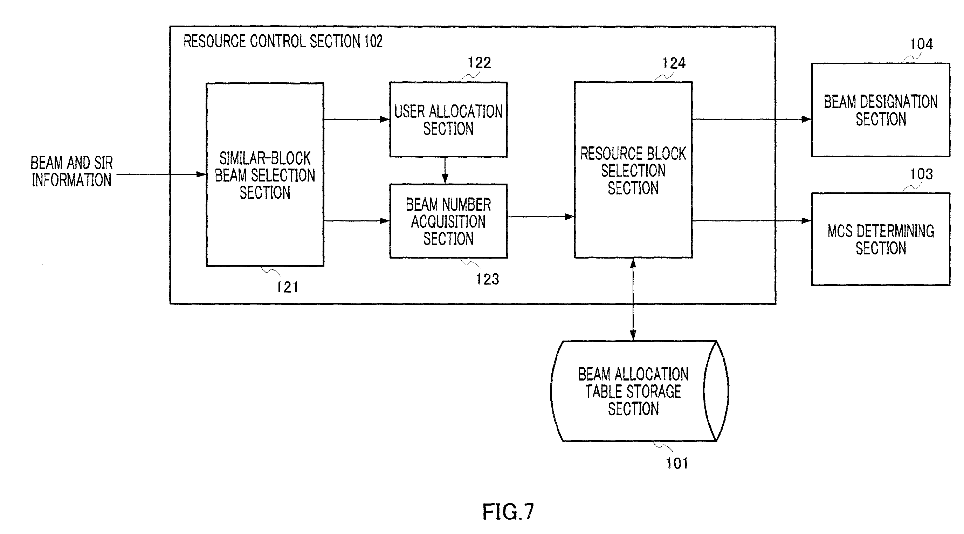

Next, resource control section 102 shown in FIG.4 will be explained in detail. FIG. 7 is a block diagram showing the internal configuration of resource control section 102 shown in FIG.4. In Fig.7, similar-block beam selection section 121 acquires the beam information and SIR information fed back from receiving apparatus 150, sums up (or averages) the SIR in resource blocks of similar frequency characteristics every beam and selects the beam of the best sum of the SIR as SIR suitable for the resource block. Similar-block beam selection section 121 performs this beam selection over all users in communication in the cell and outputs the resource block and the beam suitable for the corresponding resource block to user allocation section 122 and beam number acquisition section 123.

User allocation section 122 allocates users to the resource blocks based on the resource blocks outputted from similar-block beam selection section 121 and the SIR of the respective users when beams suitable for the resource blocks are used. Examples of this allocation method include the maximum CIR method of allocating a user having a maximum SIR and the proportional fairness method of allocating a user having a maximum instantaneous increment with respect to the time-average of SIR. The user allocation information is outputted to beam number acquisition section 123.

Based on the user allocation information outputted from user allocation section 122, beam number acquisition section 123 determines a user to be allocated for each group of resource blocks of similar frequency characteristics as SIR addition targets in similar-block beam selection section 121, acquires the beam number selected for the corresponding resource block by the allocated user and outputs the acquired beam number to resource block selection section 124.

Resource block selection section 124 searches beam allocation table storage section 101 based on the beam number outputted from beam number acquisition section 123, selects the resource block to which the beam number is applicable, reports the selected resource block to MCS determining section 103 and reports the beam number to beam designation section 104.

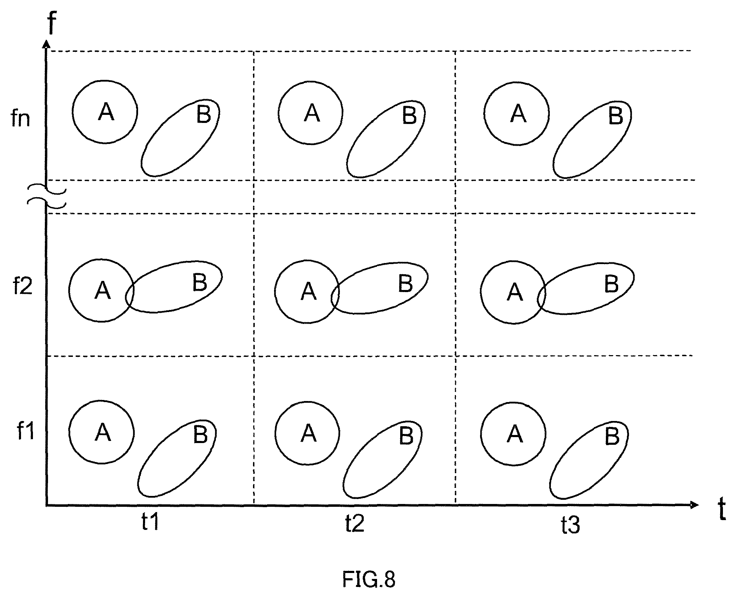

FIG.8 shows switching beams formed by transmitting apparatus 100 shown in FIG. 4. In FIG.8, the horizontal axis is time (t1 to t3) and the vertical axis is frequency (resource blocks f1 to fn), and, FIG. 8 shows a relationship between neighboring cell A and cell B formed by transmitting apparatus 100. As is apparent from this figure, the amount of interference of cell B with cell A in each resource block does not vary in the time domain, and the amount of interference given to cell A can be kept constant, so that it is possible to reduce user reception errors in cell A and improve transmission efficiency in cell A. Furthermore, by allocating different beams to neighboring resource blocks of similar frequency characteristics obtained without beam forming, it is possible to select beams in connection with frequency scheduling. Furthermore, by allocating beams of the same orientation to resource blocks of different frequency characteristics (e.g., f1 and fn), it is possible to select frequency blocks for the same beam gain, thereby acquiring a frequency diversity effect.

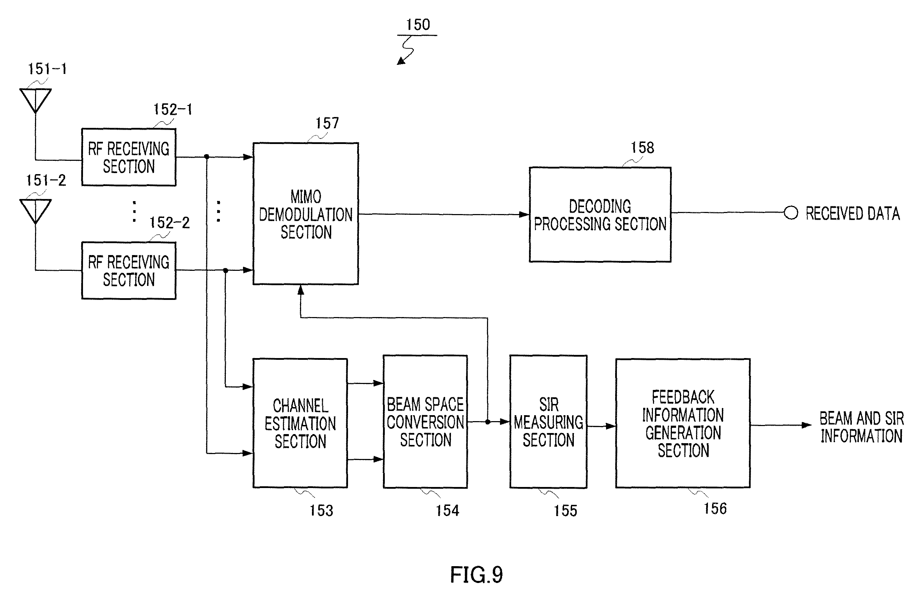

FIG. 9 is a block diagram showing the configuration of receiving apparatus 150 according to Embodiment 1 of the present invention. In this figure, RF receiving sections 152-1 and 152-2 apply predetermined radio receiving processing including down-conversion and A/D conversion to signals received at receiving antennas 151-1 and 151-2, outputs the part of the signal subjected to the radio receiving processing corresponding to the reference signal to channel estimation section 153 and the part corresponding to the data signal to MIMO demodulation section 157.

Channel estimation section 153 estimates fading fluctuation for all combinations of transmitting antennas 110-1 and 110-2 shown in FIG.4 with receiving antennas 151-1 and 151-2 using the parts corresponding to the reference signals outputted from RF receiving sections 152-1 and 152-2 and outputs the estimation result to beam space conversion section 154.

Beam space conversion section 154 obtains channel matrix H^ from the channel estimation value of each transmitting antenna outputted from channel estimation section 153 and multiplies determined channel matrix H^ by weight vector $e_m$ matching the default beam pattern. Equation 1 below shows an example of a case where assuming the number of transmitting antennas is four, a unitary matrix is generated using four orthogonal weight vectors.

[1]

$$\hat{\mathbf{H}}_E = \hat{\mathbf{H}}\mathbf{E}, \ \mathbf{E} = [\mathbf{e}_0, \mathbf{e}_1, \mathbf{e}_2, \mathbf{e}_3], \ \mathbf{e}_m \frac{1}{\sqrt{M}} \begin{bmatrix} 1 & j^m & j^{2m} & j^{3m} \end{bmatrix}^T \quad \cdots \text{(Equation 1)}$$

SIR measuring section 155 measures SIR of each resource block when each beam is used based on the channel estimation value matching each beam outputted from beam space conversion section 154 and outputs the measurement result to feedback information generation section 156.

Feedback information generation section 156 transmits the measurement result (SIR information and beam information) outputted from SIR measuring section 155 to transmitting apparatus 100 as feedback information as shown in FIG.6. The method of generating feedback information is not limited to the method shown in FIG.6 and, for example, representative values alone may be used for the resource blocks of similar frequency characteristics, or information on each beam may be fed back in frame units by, for example, sending SIR information of beam bm1 using frame 1 and sending SIR information of beam bm2 using frame 2.

MIMO demodulation section 157 MIMO-demodulates the parts corresponding to the data signals outputted from RF receiving sections 152-1 and 152-2 based on a channel estimation value corresponding to the beams outputted from beam space conversion section 154 and outputs the MIMO-demodulated signal to decoding processing section 158.

Decoding processing section 158 applies error correction decoding processing to the signal outputted from MIMO demodulation section 157 and acquires received data.

In this way, according to Embodiment 1, by combining frequency scheduling and beam forming and by associating beam directions with all resource blocks to be allocated through frequency scheduling repeatedly, interference given to other cells can be kept constant, so that it is possible to reduce reception errors by users in other cells and improve transmission efficiency in other cells. Furthermore, by allocating beams of different directions to neighboring resource blocks of similar frequency characteristics, beams can be selected. Furthermore, by allocating beams of the same orientation to resource blocks of different frequency characteristics, frequency blocks at the same beam gain can be selected, thereby obtaining a frequency diversity effect.

(Embodiment 2)

The configuration of a transmitting apparatus according to Embodiment 2 of the present invention is the same as shown in FIG. 4 of Embodiment 1, and the present embodiment will be explained with reference to FIG.4.

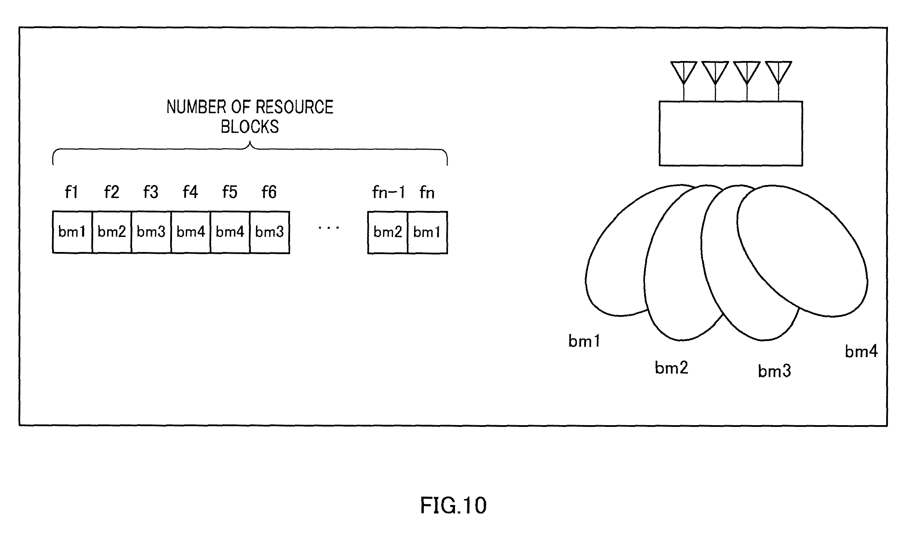

In FIG.4, with respect to fn resource blocks, beam allocation table storage section 101 stores a table in which bm1, bm2, bm3, bm4, bm4, bm3, bm2, and bm1 are repeatedly allocated in order from the resource block of the lowest frequency using four beams bm1 to bm4 as shown in FIG.10.

In this way, when, for example, the position of a certain user is in the direction of beam bm1 and beams bm1 to bm4 are repeatedly allocated as explained in Embodiment 1, if fading deterioration occurs in a cycle of four resource blocks, the reception characteristic of the certain user deteriorates, but even when such fading occurs, it is possible to select beam bm1 and a resource block of a good SIR.

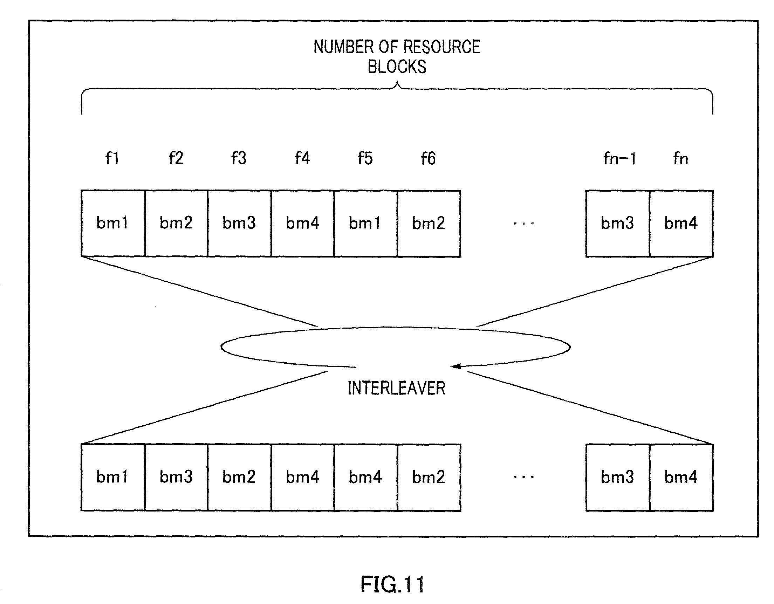

As shown in FIG. 11, with respect to fn resource blocks, even when beam allocation table storage section 101 repeatedly allocates bm1, bm2, bm3 and bm4 in order from the resource block of the lowest frequency, interleaves the allocated order using a random interleaver and randomizes the beam allocation order, it is possible to avoid deterioration of the reception characteristic due to regular fading.

(Embodiment 3)

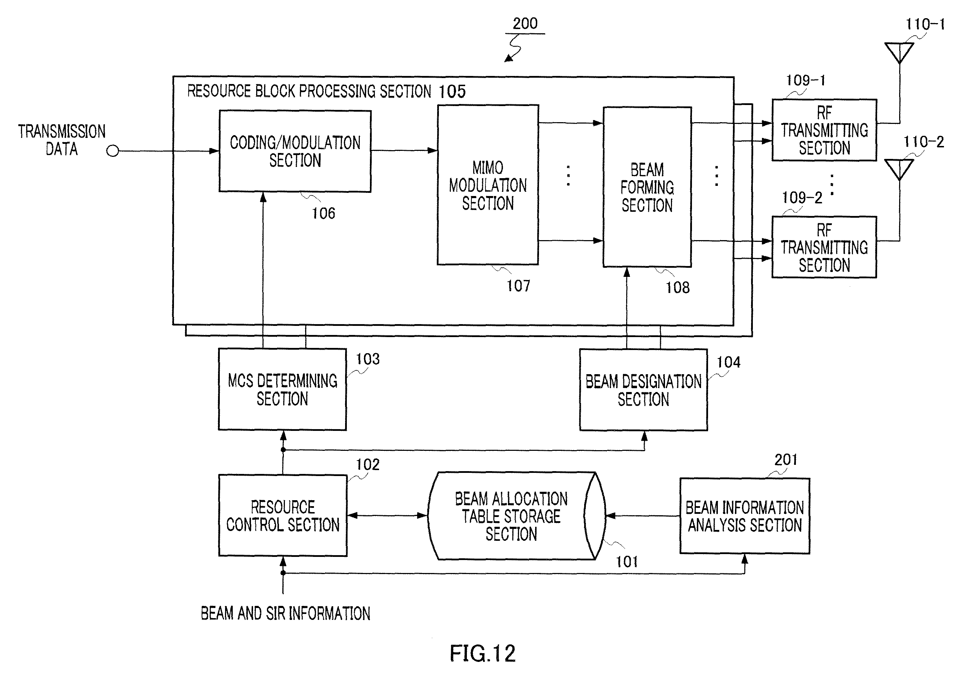

FIG.12 is a block diagram showing the configuration of transmitting apparatus 200 according to Embodiment 3 of the present invention. FIG.12 is different from FIG.4 in that beam information analysis section 201 is added.

Beam information analysis section 201 tallies beam information fed back from each user (receiving apparatus 150 shown in FIG. 9) and commands beam allocation table storage section 101 to update a table based on the tallied result regularly. The table updating command includes, for example, to allocate beams requested by many users with high frequency and to allocate beams requested by few users with low frequency. Furthermore, table updating is commanded in several tens of times to several hundreds of times longer cycle than the packet length.

In this way, by updating a beam allocation table based on a result of tallying beam information sent from individual users, it is possible to create a beam allocation table in accordance with the propagation environment around the transmitting apparatus and select beams more efficiently.

(Embodiment 4)

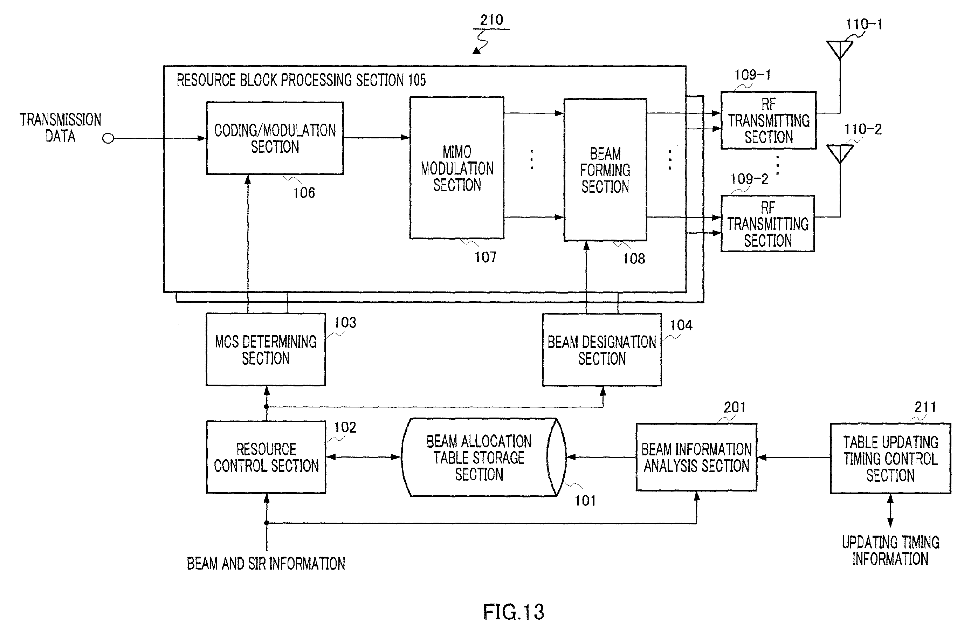

FIG.13 is a block diagram showing the configuration of transmitting apparatus 210 according to Embodiment 4 of the present invention. FIG.13 is different from FIG.12 in that table updating timing control section 211 is added.

Table updating timing control section 211 transmits and receives table updating timing information to and from other transmitting apparatuses located around transmitting apparatus 210, and controls table updating command timings of beam information analysis section 201 with reference to table updating timings at other transmitting apparatuses. To be more specific, for example, it is possible to adopt timings different from table updating timings at other transmitting apparatuses whenever possible or the same timings as table updating timings at other transmitting apparatuses whenever possible.

In this way, adjusting table updating timings among transmitting apparatuses makes it possible to change influences of interference given by the transmitting apparatuses in the long term.

(Embodiment 5)

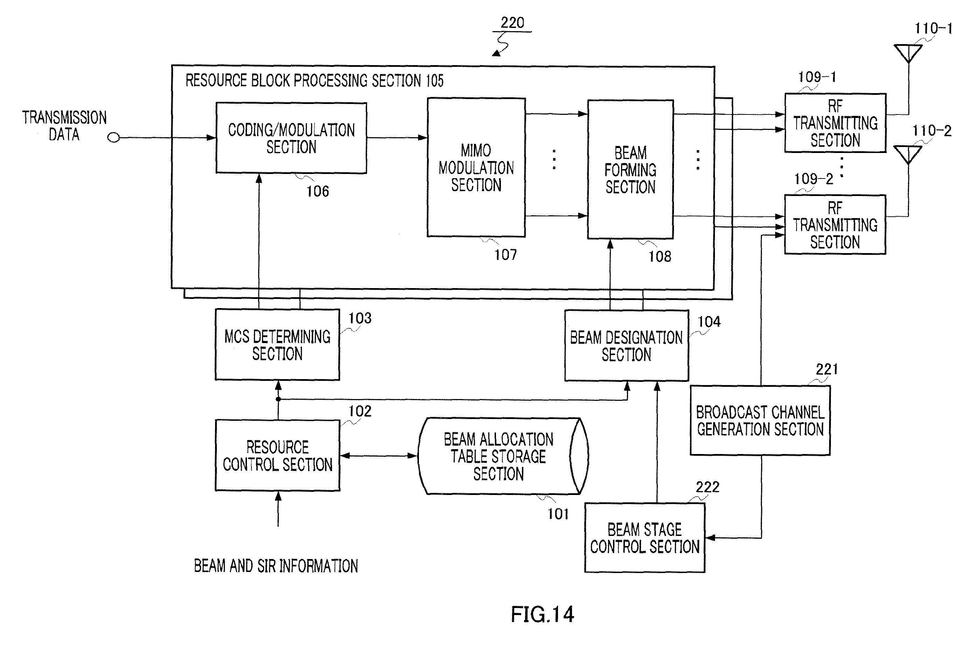

FIG.14 is a block diagram showing the configuration of transmitting apparatus 220 according to Embodiment 5 of the present invention. FIG.14 is different from FIG.4 in that broadcast channel generation section 221 and beam stage control section 222 are added.

Broadcast channel generation section 221 generates broadcast data (or multicast data), outputs the broadcast data generated to RF transmitting section 109-2 and reports transmission timing of the broadcast data to beam stage control section 222.

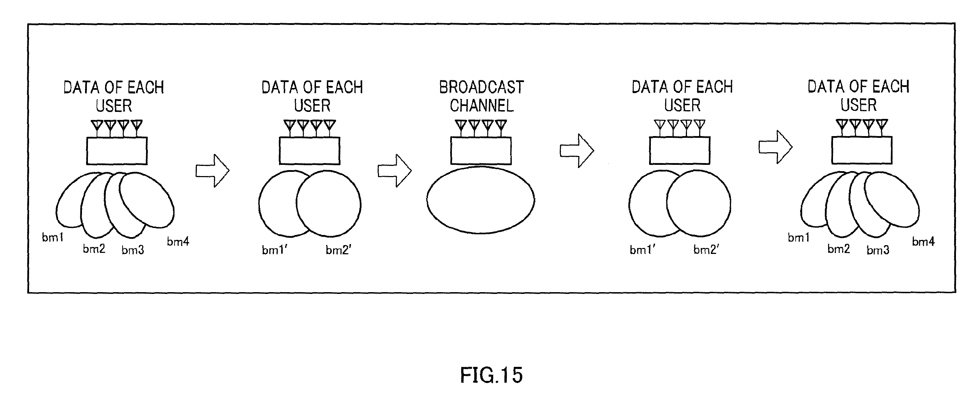

Beam stage control section 222 controls beam designation section 104 so that beam designation section 104 switches the beam width gradually based on the transmission timing reported from broadcast channel generation section 221. More specifically, as shown in FIG.15, beam stage control section 222 performs controls such that the beam width is widened gradually before broadcast channel transmission, the beam is non-directional (i.e. no beam) during the broadcast channel transmission and the beam width is narrowed gradually after the broadcast channel transmission. Here, the beam is non-directional during the broadcast channel transmission because the broadcast channel needs to be transmitted to the entire service area.

In this way, controlling a beam width gradually before and after transmission of a broadcast channel can reduce fluctuating interference affecting other cells.

Embodiments of the present invention have been explained.

Although with the embodiments above cases have been described where the present invention is configured by hardware, the present invention may be implemented by software.

Furthermore, each functional block employed in the description of the aforementioned embodiment may typically be implemented as an LSI constituted by an integrated circuit. These may be individual chips or partially or totally contained on a single chip. "LSI" is adopted here but this may also be referred to as "IC, " "system LSI," "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LST's as a result of the advancement of semiconductor technology or a derivative other technology, it is naturally also possible to carry out function block integration using this technology. Application of biotechnology is also possible.

The disclosure of Japanese Patent Application No. 2006-011556, filed on January 19, 2006, including the specification, drawings and abstract, is incorporated herein by reference in its entirety.

Industrial Applicability

The radio transmitting apparatus and the radio transmission method according to the present invention can reduce, when frequency scheduling and beam forming are combined, reception errors by users in other cells, improve transmission efficiency in the other cells and are applicable to, for example, a radio communication base station apparatus.

**Claims**

1. A radio transmitting apparatus comprising:

   a storage section that associates a plurality of resource blocks to be allocated to users with a plurality of beams of different directions and stores the associated resource blocks and beams;
   a resource control section that allocates a resource block to a user of best received quality and allocates a beam associated with the resource block stored in the storage section; and
   a transmission section that transmits transmission data using the allocated resource block and beam.

2. The radio transmitting apparatus according to claim 1, wherein the storage section associates different beams between neighboring resource blocks and stores the associated beams and resource blocks.

3. The radio transmitting apparatus according to claim 1, wherein the storage section associates the same beams between separate resource blocks and stores the associated beams and resource blocks.

4. The radio transmitting apparatus according to claim 1, wherein the storage section repeats associating the beams and the resource blocks in ascending order of numbers of the resource blocks, first in ascending order of beam numbers and then in descending order of beam numbers, and stores the associated beams and resource blocks, or first in descending order of the beam numbers and then in ascending order of beam numbers, and stores the associated beams and resource blocks.

5. The radio transmitting apparatus according to claim 1, wherein the storage section associates the beams with the resource blocks on a random basis and stores the associated resource blocks and beams.

6. The radio transmitting apparatus according to claim 1, further comprising a beam information analysis section that tallies beam information requested from the user and updates the associations between the resource blocks and beams stored in the storage section based on frequencies of request between beam directions.

7. The radio transmitting apparatus according to claim 6, further comprising an updating timing control section that transmits and receives timings of updating the associations between the resource blocks and beams stored in the storage section to and from other radio transmitting apparatuses and controls the timings of updating in the radio transmitting apparatus based on the timings of updating in the other radio transmitting apparatuses.

8. The radio transmitting apparatus according to claim 1, further comprising a beam stage control section that adjusts a beam width gradually before and after transmission of a non-directional channel.

9. A radio transmission method comprising:

a resource control step of adopting frequency scheduling and beam forming, whereby a plurality of beams of different directions associated with a plurality of resource blocks to be allocated to users are fixed in a time domain and switched in a frequency domain; and
a transmission step of transmitting transmission data using the beams controlled in the resource control step.

10. A radio communication system comprising:

a radio receiving apparatus that comprises:

a received quality measurement section that measures received quality of a signal transmitted from a radio transmitting apparatus for each of a plurality of beams of different directions every resource block to be allocated to a user; and
a feedback section that feeds back the measured received quality to the radio transmitting apparatus; and

a radio transmitting apparatus that comprises:

a storage section that associates the plurality of beams with the resource blocks and stores the associated resource blocks and beams;
a resource control section that allocates a resource block to a user of best received quality based on the received quality fed back from the radio receiving apparatus and allocates a beam associated with the resource block stored in the storage section; and
a transmission section that transmits transmission data to the radio receiving apparatus using the allocated resource block and beam.

FIG.1

FIG.2

FIG.3

EP 1 959 700 A1

RESOURCE BLOCK PROCESSING SECTION 105

TRANSMISSION DATA ○ —→ CODING/MODULATION SECTION

MIMO MODULATION SECTION

BEAM FORMING SECTION

RF TRANSMITTING SECTION

RF TRANSMITTING SECTION

100

110-1

109-1

110-2

109-2

106

107

108

MCS DETERMINING SECTION 103

BEAM DESIGNATION SECTION 104

RESOURCE CONTROL SECTION 102

BEAM ALLOCATION TABLE STORAGE SECTION 101

BEAM AND SIR INFORMATION

FIG.4

FIG.5

FIG.6

FIG.7

RESOURCE CONTROL SECTION 102

SIMILAR-BLOCK BEAM SELECTION SECTION — 121

USER ALLOCATION SECTION — 122

BEAM NUMBER ACQUISITION SECTION — 123

RESOURCE BLOCK SELECTION SECTION — 124

BEAM AND SIR INFORMATION

BEAM DESIGNATION SECTION — 104

MCS DETERMINING SECTION — 103

BEAM ALLOCATION TABLE STORAGE SECTION — 101

FIG.8

FIG.9

EP 1 959 700 A1

EP 1 959 700 A1

NUMBER OF RESOURCE
BLOCKS

f1  f2  f3  f4  f5  f6        fn−1  fn

| bm1 | bm2 | bm3 | bm4 | bm4 | bm3 | · · · | bm2 | bm1 |

bm1

bm2

bm3

bm4

FIG.10

NUMBER OF RESOURCE
BLOCKS

f1    f2    f3    f4    f5    f6        fn−1    fn

| bm1 | bm2 | bm3 | bm4 | bm1 | bm2 | · · · | bm3 | bm4 |

INTERLEAVER

| bm1 | bm3 | bm2 | bm4 | bm4 | bm2 | · · · | bm3 | bm4 |

FIG.11

FIG.12

EP 1 959 700 A1

FIG.13

EP 1 959 700 A1

EP 1 959 700 A1

FIG.14

DATA OF EACH
USER

bm1   bm2   bm3   bm4

DATA OF EACH
USER

bm1'   bm2'

BROADCAST
CHANNEL

DATA OF EACH
USER

bm1'   bm2'

DATA OF EACH
USER

bm1   bm2   bm3   bm4

FIG.15

<table>
<tr><td colspan="2" align="center">**INTERNATIONAL SEARCH REPORT**</td><td>International application No.<br>PCT/JP2007/050690</td></tr>
</table>

A. CLASSIFICATION OF SUBJECT MATTER
*H04Q7/36*(2006.01)i, *H04B7/26*(2006.01)i, *H04J11/00*(2006.01)i, *H04J15/00* (2006.01)i

According to International Patent Classification (IPC) or to both national classification and IPC

B. FIELDS SEARCHED

Minimum documentation searched (classification system followed by classification symbols)
H04Q7/36, H04B7/26, H04J11/00, H04J15/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-151567 A (Samsung Electronics Co., Ltd.), 09 June, 2005 (09.06.05), Full text & US 2005/0099937 A1 & EP 1531594 A1 | 1-10 |
| A | JP 2004-537875 A (Broadstorm Telecommunications, Inc.), 16 December, 2004 (16.12.04), Par. Nos. [0023], [0087] to [0090] & US 2002/0119781 A1 & EP 1344365 A1 & WO 2002/049306 A2 & CN 1481633 A | 2,3 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 April, 2007 (24.04.07) | Date of mailing of the international search report<br>15 May, 2007 (15.05.07) |
|---|---|
| Name and mailing address of the ISA/<br>   Japanese Patent Office<br><br>Facsimile No. | Authorized officer<br><br><br>Telephone No. |

Form PCT/ISA/210 (second sheet) (April 2005)

## EP 1 959 700 A1

**REFERENCES CITED IN THE DESCRIPTION**

**Patent documents cited in the description**

- JP 2006011556 A